# EUROPÄISCHE PATENTANMELDUNG

(11) **EP 3 910 287 A1**
(43) Veröffentlichungstag der Anmeldung: **17.11.2021**
(21) Anmeldenummer: 20174743.3
(22) Anmeldetag: 14.05.2020
(51) Int. Cl.: G01B 11/25

(54) **VERFAHREN UND VORRICHTUNG ZUR VERMESSUNG EINES PHYSISCHEN OBJEKTS**

(71) Anmelder: Fill Gesellschaft m.b.H., 4942 Gurten (AT)
(72) Erfinder: OBLINGER, Fabian, 4983 St. Georgen bei Obernberg (AT); WEINBERGER, Nikolaus, 4942 Wippenham (AT)
(74) Vertreter: Burger, Hannes

(57) **Zusammenfassung**

Ein Verfahren und eine Vorrichtung zur Vermessung eines physischen Objektes (1), wobei mittels zumindest einer Kamera (2) aus unterschiedlichen Perspektiven (A, B, C) Bilddaten eindeutig identifizierbarer Punkte (3, 4, 5, 6, 7) auf dem Objekt (1) aufgezeichnet und aus den Bilddaten ein räumliche Positionen der eindeutig identifizierbaren Punkte (3, 4, 5,6) ermittelt werden und eine dreidimensionale erste Punktwolke (8) der eindeutig identifizierbaren Punkte (3, 4, 5, 6, 7) als globale Karte des Objekts (1) erstellt wird, wobei zur Erfassung einer Oberflächenbeschaffenheit des Objektes (1) an einer Oberfläche des Objektes (1) reflektierte Lichtstrahlenbündel als Bilddaten erfasst werden, wobei die aus an der Oberfläche des Objektes reflektierten Lichtstrahlenbündeln gewonnenen Bilddaten zumindest einige der eindeutig identifizierbaren Punkte (3, 4, 5, 6, 7) als auch zwischen den eindeutig identifizierbaren Punkten gelegene Oberflächenbereiche umfassen, und aus den erfassten Bilddaten der an der Oberfläche des Objekts reflektierten Lichtstrahlenbündel eine zweite, dreidimensionale Punktwolke (9) als lokale Karte des Objekts ermittelt wird, wobei die erste Punktwolke (8) und die zweite Punktwolke (9) unter Verwendung der eindeutig identifizierbaren Punkte als Referenzpunkte zu einer dritten Punktwolke (10) zusammengeführt werden.

## Beschreibung

Die Erfindung betrifft ein Verfahren zur Vermessung eines physischen Objektes, wobei mittels zumindest einer Kamera aus unterschiedlichen Perspektiven Bilddaten eindeutig identifizierbarer Punkte auf dem Objekt aufgezeichnet und aus den Bilddaten räumliche Positionen der eindeutig identifizierbaren Punkte ermittelt werden und zumindest eine dreidimensionale erste Punktwolke der eindeutig identifizierbaren Punkte als globale Karte des Objekts erstellt wird.

Weiters betrifft die Erfindung eine Vorrichtung zur Vermessung eines physischen Objektes, wobei die Vorrichtung zumindest eine Kamera umfasst.

Ein Verfahren und eine Vorrichtung der oben genannten Art sind beispielsweise aus der DE102017122627A1 bekannt geworden. Bei dem bekannten Verfahren werden Positionen und Orientierungen ausgewählter Punkte, die als Markierungen ("Tracking-Marker") auf das physische Objekt aufgebracht. Die Positionen der Markierungen werden photogrammetrisch ermittelt. Derartige Verfahren zur photogrammetrischen Erfassung dreidimensionaler Objekte sind auch unter der Bezeichnung "Structure from Motion" bekannt geworden. Zudem werden bei dem bekannten Verfahren die Orientierungen, also die Oberflächennormalen der Markierungen, mittels photometrischer Stereoanalyse ermittelt.

Nachteilig an der bekannten Lösung ist vor allem, dass eine Textur bzw. Beschaffenheit der zwischen den einzelnen Markern gelegenen Oberflächenbereiche nicht erfasst wird und somit nur die Form des Objektes erfasst werden kann. Für viele Anwendungen ist es jedoch erforderlich, auch die Eigenschaften der Oberfläche möglichst genau zu kennen. So kann es beispielsweise erforderlich sein, falls die Vermessung im Rahmen einer Qualitätskontrolle erfolgt, auch kleine Oberflächenbeschädigungen, wie beispielsweise Kratzer, Löcher, Materialabträge, etc. erkennen zu können.

Es ist daher eine Aufgabe der Erfindung, die Nachteile der bestehenden Verfahren zu überwinden und eine genauere Erfassung des Objektes zu ermöglichen.

Diese Aufgabe wird mit einem Verfahren der eingangs genannten Art erfindungsgemäß dadurch gelöst, dass zur Erfassung einer Oberflächenbeschaffenheit des Objektes an einer Oberfläche des Objektes reflektierte Lichtstrahlenbündel als Bilddaten erfasst werden, wobei die aus an der Oberfläche des Objektes reflektierten Lichtstrahlenbündeln gewonnenen Bilddaten zumindest einige der eindeutig identifizierbaren Punkte als auch zwischen den eindeutig identifizierbaren Punkten gelegene Oberflächenbereiche umfassen, und aus den erfassten Bilddaten der an der Oberfläche des Objekts reflektierten Lichtstrahlenbündel zumindest eine zweite, dreidimensionale Punktwolke als lokale Karte des Objekts ermittelt wird, wobei die erste Punktwolke und die zweite Punktwolke unter Verwendung der eindeutig identifizierbaren Punkte als Referenzpunkte zu zumindest einer dritten Punktwolke zusammengeführt werden.

Die erfindungsgemäße Lösung ermöglicht eine sehr genaue Kartographierung der Oberfläche des Objektes. Somit gibt das Modell nicht nur die aus der Lage der eindeutig identifizierbaren Punkte ermittelte dreidimensionale Form des Objektes wieder, sondern auch die Oberflächenbeschaffenheit, d.h. die Oberflächengeometrie, des Objektes wieder und ermöglicht somit eine genaue Analyse des Objektes.

Gemäß einer vorteilhaften Weiterbildung der Erfindung, welche eine Erfassung der Oberflächengeometrie des Objektes ermöglicht, kann zumindest ein bekanntes Muster auf die Oberfläche des Objekts projiziert und dieser überlagert wird, wobei Bilddaten des der Oberfläche überlagerten Musters erzeugt werden und anhand von Abweichungen der erzeugten Bilddaten des dem Objekt überlagerten Musters von dem bekannten Muster eine Oberflächengeometrie der Oberfläche mittels eines Structured Light Verfahrens erfasst wird, wobei die Bilddaten der an der Oberfläche reflektierten Lichtstrahlenbündel die Bilddaten des dem Oberflächenabschnitt des Objekts überlagerten Musters umfassen.

Bei einer besonders vorteilhaften Ausführungsform der Erfindung kann es vorgesehen sein, dass der an der Oberfläche des Objekts reflektierten Lichtstrahlenbündel bei unterschiedlichen Beleuchtungsszenarien aufgenommene Bilddaten umfassen, wobei sich die unterschiedlichen Beleuchtungsszenarien zumindest durch die Richtung, aus welcher die Beleuchtung erfolgt, und somit durch den Schattenwurf unterscheiden, wobei aus den bei unterschiedlichen Beleuchtungsszenarien aufgenommenen Bilddaten mittels photometrischer Stereoanalyse die Oberflächenbeschaffenheit ermittelt wird. Diese Variante der Erfindung ist besonders vorteilhaft, wenn sie in Kombination mit der im vorigen Absatz genannten Erfassung der Oberflächengeometrie durch ein Structured Light Verfahren kombiniert wird, da Stellen, die im Structured Light Verfahren, besonders starke Reflexionen aufweisen, zusätzlich mittels der photometrischen Stereoanalyse analysiert werden können. Somit kann durch die Verwendung der photometrischen Stereoanalyse in Kombination mit dem Structured Light Verfahren die Erfassungsgenauigkeit wesentlich verbessert werden.

Als besonders vorteilhaft hinsichtlich einer Vereinfachung der Verarbeitung sowie Erhöhung der Verarbeitungsgeschwindigkeit und Genauigkeit hat sich herausgestellt, dass die Bilddaten des auf die Oberfläche des Objektes projizierten Musters und die bei unterschiedlichen Beleuchtungsszenarien aufgenommenen Bilddaten jeweils aus mehreren, den Perspektiven, unter denen die eindeutig identifizierbarer Punkte zur Bildung der ersten Punktwolke aufgezeichnet werden, entsprechenden Perspektiven aufgezeichnet werden, sodass für jede Perspektive zumindest ein Satz von Bilddaten gebildet wird, welcher Satz von Bilddaten Bilddaten des auf die Oberfläche projizierten Musters und der bei unterschiedlichen Beleuchtungsszenarien sowie der zur Erzeugung der ersten Punktwolke aufgezeichneten Bilddaten umfasst. Anders gesagt, können mehrere unterschiedlich weiterverarbeitete Bilder des Objektes aus ein und derselben Perspektive gemacht werden, bevor die Kamera weitergeführt wird. Dadurch, dass Bilddaten, die für die "Structure from Motion", "Structured Light" und die "photometrische Stereoanalyse" verwendet werden aus einer gemeinsamen Perspektive aufgenommen werden, hat den Vorteil, dass ein Abgleich dieses Daten vereinfacht wird, da die Erfassung dieser Bilddaten von derselben Relativposition in Bezug auf das Objekt aus erfolgt und aus diesen Daten gewonnene Informationen direkt miteinander in Relation gesetzt werden können. Weiters ist es besonders vorteilhaft, dass Genauigkeitsschwankungen bei der Erfassung von Pose und Position des Roboterarms bei der Rekonstruktion des physischen Objekts nur einen geringen bzw. vernachlässigbaren Einfluss haben.

In dem oben genannten Zusammenhang hat es sich auch als besonders vorteilhaft erwiesen, dass die Bilddaten des auf der Oberfläche des Objektes projizierten Bildes des bekannten Musters und die Bilddaten der eindeutig identifizierbaren Punkte zur Bildung der ersten Punktewolke sowie die bei unterschiedlichen Beleuchtungsszenarien aufgenommenen Bilddaten mit derselben Kamera aufgezeichnet werden. Durch diese Variante der Erfindung wird zudem der Hardwareaufwand deutlich reduziert, da auf zusätzliche Sensoren, beispielsweise einen Sensor zur Erfassung von Structured Light verzichtet werden kann.

Als besonders vorteilhaft hat sich eine Variante der Erfindung herausgestellt, bei der die Bilddaten der an den Oberflächenabschnitten reflektierten Lichtstrahlenbündel mit einer Lichtfeldkamera erzeugte Bilddaten umfasst, wobei die Oberflächenbeschaffenheit aus den mit der Lichtfeldkamera erzeugten Bilddaten ermittelt werden. Die Verwendung einer Lichtfeldkamera ermöglicht es, gleichzeitig eine Oberflächengeometrie, d.h. eine Oberflächenstruktur bzw. Oberflächenbeschaffenheit, des Objektes sowie die für die Bestimmung der Konturumrisse des Objektes notwendigen Punkte zu erfassen. Lichtfeldkameras, auch plenoptische Kameras genannt, ermöglichen eine dreidimensionale Darstellung von Gegenständen. Derartige Kameras sind dem Fachmann bekannt, beispielsweise aus der WO 2010/121637 A1 und der EP 2244484 B1, in welchen auch zu berücksichtigenden Parameter bei der Konstruktion derartiger Kameras näher erläutert sind.

Gemäß einer ebenfalls sehr vorteilhaften Weiterbildung der Erfindung kann es vorgesehen sein, dass auf die Oberfläche des Objektes Tracking-Marker aufgebracht werden und die eindeutig identifizierbaren Punkte durch diese Tracking-Marker gebildet werden. Die Tracking-Marker können beispielsweise kreisrunde Marker aus Papier mit schwarzem Rand und hellem Zentrum sein. Grundsätzlich können aber auch alle andere Arten von Tracking-Markern (Form, Muster und Material) zum Einsatz kommen. Für die photogrammetrische Messung ist es allerdings vorteilhaft, wenn das Zentrum des Tracking-Markers gekennzeichnet ist oder sich in eindeutiger Weise bestimmen lässt. So kann der Mittelpunkt des Tracking-Markers als Kreis ausgebildet, um subpixelgenau das Zentrum finden zu können. Rund um das Zentrum des Tracking-Markers kann ein Gray Code angeordnet sein, um den Tracking-Marker eindeutig identifizieren zu können. Zudem ist aus der WO 2016/071227 A1 ein Tracking-Marker mit einer spezielle Farbmarkierung bekannt geworden. Dieser Tracking-Marker weist ein Farbspektrum mit verschiedenen Farbwerten auf. Die Farbwerte unterscheiden sich in einem sinusförmigen Muster entlang einer elliptischen Bahn um den Mittelpunkt des optischen Markers. Mit Hilfe dieses Farbmusters lässt sich auch die Pose des optischen Markers sehr exakt bestimmen.

Die Tracking-Marker können anstatt physischer Marker auch durch projizierte Lichtmuster am Objekt ergänzt oder ersetz werden. Bei dieser Variante befindet sich ein Projektor oder mehrere statische Projektoren im Raum, welche ein Muster (Punkte, Linien, etc.) auf das zu rekonstruierende Objekt projizieren. Der räumliche Zusammenhang zwischen den projizierten Punkten und dem Objekt ändert sich während der Rekonstruktionsphase nicht. Mithilfe dieser Variante können eindeutig identifizierbare Punkte auf Objekten mit homogenen Oberflächenstrukturen definiert werden, ohne dass physische Marker am Objekt platziert und im Anschluss wieder entfernt werden müssen.

Eine Kombination zwischen projizierten und physischen Markern ist zu bevorzugen, wobei die physischen Marker vorrangig statisch in der Szene rund um das zu prüfende Bauteil befestigt werden und die projizierten Merkmale sich hauptsächlich auf das zu prüfende Objekt beschränken. Eine Referenzierung des Objekts zu in der Umgebung befestigten Markern erfolgt vorteilhafter weise über eine Aufnahme/Haltevorrichtung für das Objekt. Geometrische Merkmale am Bauteil die für die Referenzierung verwendet werden ermöglichen so ein besonders genaues wiederaufspannen von Bauteilen. Ebenso sind diese vorteilhaft für einen Abgleich mit idealen CAD Daten des Objekts. Eine Fixierung des Objekts ist hierfür verformungsfrei bzw. Verformungsarm auszuführen. Es ist aber nicht ausgeschlossen das besonders flexible Bauteile durch die Fixierung in Form gebracht werden um so beispielsweise ein später Bauteil Einbausituation nachzustellen. Besonders vorteilhaft ist die Fixierung in Einbauorientierung damit auftretende Verformungen durch Schwerkraft beispielsweise miterfasst sind.

Als besonders vorteilhaft hat sich eine Variante der Erfindung herausgestellt, bei der die zumindest eine Kamera und zumindest eine Beleuchtungsquelle, insbesondere alle verwendeten Beleuchtungsquellen, an einem Roboterarm montiert sind und von diesem in Abstand von dem Objekt über dessen Oberfläche geführt werden. Durch das Platzieren des Systems auf einem Roboter können Bauteile unterschiedlicher Dimensionen vollautomatisiert detailgetreu und mit einem sehr hohen Informationsgehalt erfasst und rekonstruiert werden. Ebenso ist die Anzahl von Perspektiven und deren Erreichbarkeit mit einem wenigstens 6 Achsen aufweisenden Industrieroboter vorteilhaft. Durch die Vergrößerung des Arbeitsraums mittels einer zusätzlichen linear Achse, 7te Achse an der Roboterbasis, ist die Anzahl der möglichen Orientierungen und Positionen des Roboterarms höher und so die Einschränkung durch Kollisionen von Bauteil und Roboterstruktur umgehbar.
Besonders vorteilhaft ist, wenn die Roboterbasis auf einer mobilen Plattform moniert ist. So ist es möglich das System zwischen Bauteilen und Aufspannungen frei zu verfahren und das System ist universell einsetzbar. Ebenso denkbar ist die Montage auf einem Stativ zur einfachen Positionsänderung der Roboterplattform oder des Systems.
Eine vorteilhafte Ausführung des Systems ist, wenn das Bauteil eine oder mehrere Bewegungsachsen, z.B. eine Drehachse und/oder eine lineare Bewegungsachse,aufweist. Besonders vorteilhaft ist es wenn diese Bewegungsachse über eine Industriesteuerung relativ zum System steuerbar ist. Weiters vorteilhaft ist, wenn die Projektoren die Muster auf das Bauteil projizieren mit verfahrbar oder die Projektion in der Position mitgesteuert werden.
Die oben genannte Aufgabe lässt sich auch mit einer Vorrichtung der eingangs genannten Art erfindungsgemäß dadurch lösen, dass die Vorrichtung zumindest eine Kamera und eine in mehrere, getrennt voneinander und gleichzeitig aktivierbare Beleuchtungssegmente aufweisende Beleuchtungsvorrichtung umfasst, wobei die Beleuchtungssegmente einen Rahmen bilden, wobei die einzelnen Beleuchtungssegmente um eine zentrale Öffnung des Rahmens angeordnet sind, wobei die Vorrichtung zumindest eine Steuerung aufweist, die dazu eingerichtet ist, aus von der Kamera erzeugten Bilddaten der Oberfläche des physischen Objekts, ein Modell zumindest der Form und Oberflächenbeschaffenheit des physischen Objekts zu ermitteln. Durch die ring- bzw. rahmenförmige Multisegmentbeleuchtung lassen sich für zur Erfassung der Bilddaten während der Vermessung des Objektes benötigte Beleuchtungsszenarien realisieren. So können beispielsweise für die Aufzeichnung von für ein Structure from Motion Verfahren verwendeten Bilddaten als auch für die Aufzeichnung von für eine photometrischer Stereoanalyse verwendeten Bilddaten das jeweils optimale Beleuchtungsszenarien erzeugt werden. Insbesondere ermöglicht das selektive Einschalten von Segmenten der Beleuchtung im Rahmen der Aufzeichnung von für eine photometrische Stereoanalyse verwendeten Bilddaten das Herstellen unterschiedlicher Schattenwürfe, ohne dass die Position der Kamera oder Beleuchtungsquelle verändert werden muss.

Gemäß einer vorteilhaften Weiterbildung der Erfindung kann es vorgesehen sein, dass die Vorrichtung weiters einen Projektor zur Erzeugung eines Musters, insbesondere eines streifenförmigen Musters, auf dem physischen Objekt aufweist. Diese Variante der Erfindung eignet sich besonders für die Verwendung eines Structured Light Verfahrens zur Vermessung der Oberfläche des Objektes.

Als besonders vorteilhaft hinsichtlich einer einfachen und besonders genauen Erfassung des Objektes hat sich eine Variante der Erfindung herausgestellt, bei welcher die zumindest eine Kamera eine Lichtfeldkamera ist.

Gemäß einer bevorzugten Variante der Erfindung kann es vorgesehen sein, dass die Vorrichtung dazu eingerichtet ist, mittels der zumindest einen Kamera aus unterschiedlichen Perspektiven Bilddaten eindeutig identifizierbarer Punkte, insbesondere Tracking-Marker, auf dem Objekt aufzuzeichnen und aus den Bilddaten räumliche Positionen der eindeutig identifizierbaren Punkte zu ermitteln sowie eine dreidimensionale erste Punktwolke der eindeutig identifizierbaren Punkte als globale Karte des Objekts zu erstellen, sowie zur Erfassung einer Oberflächenbeschaffenheit des Objektes an einer Oberfläche des Objektes reflektierte Lichtstrahlenbündel als Bilddaten zu erfassen, wobei die aus an der Oberfläche des Objektes reflektierten Lichtstrahlenbündeln gewonnenen Bilddaten zumindest einige der eindeutig identifizierbaren Punkte als auch zwischen den eindeutig identifizierbaren Punkten gelegene Oberflächenbereiche umfassen, und aus den erfassten Bilddaten der an der Oberfläche des Objekts reflektierten Lichtstrahlenbündel eine zweite, dreidimensionale Punktwolke als lokale Karte des Objekts zu ermitteln, sowie die erste Punktwolke und die zweite Punktwolke unter Verwendung der eindeutig identifizierbaren Punkte als Referenzpunkte zu einer dritten Punktwolke zusammenzuführen.

Vorteilhafterweise kann die Vorrichtung dazu eingerichtet sein, zumindest ein bekanntes Muster auf die Oberfläche des Objekts projizieren und dieser zu überlagern sowie Bilddaten des der Oberfläche überlagerten Musters zu erzeugen und anhand von Abweichungen der erzeugten Bilddaten des dem Objekt überlagerten Musters von dem bekannten Muster eine Oberflächengeometrie der Oberfläche mittels eines Structured Light Verfahrens zu erfassen, wobei die Bilddaten der an der Oberfläche reflektierten Lichtstrahlenbündel die Bilddaten des dem Oberflächenabschnitt des Objekts überlagerten Musters umfassen.

Weiters kann es vorgesehen sein, dass die Bilddaten der an der Oberfläche des Objekts reflektierten Lichtstrahlenbündel bei unterschiedlichen Beleuchtungsszenarien aufgenommene Bilddaten umfassen, wobei sich die unterschiedlichen Beleuchtungsszenarien zumindest durch die Richtung, aus welcher die Beleuchtung erfolgt, und somit durch den Schattenwurf unterscheiden, wobei die Vorrichtung dazu eingerichtet ist, aus den bei unterschiedlichen Beleuchtungsszenarien aufgenommenen Bilddaten mittels photometrischer Stereoanalyse die Oberflächenbeschaffenheit zu ermitteln.

Bei einer bevorzugten Variante der Erfindung kann es vorgesehen sein, dass die Kamera und eine Beleuchtungsvorrichtung an einem Roboterarm angeordnet sind, wobei falls die Vorrichtung einen Projektor zur Erzeugung eines Musters auf der Oberfläche des Objektes aufweist, dieser Projektor bevorzugterweise ebenfalls auf dem Roboterarm angeordnet ist.

Die Erfindung samt weiterer Vorteile wird im Folgenden anhand einiger nicht einschränkender Ausführungsbeispiele näher erläutert, die in den Zeichnungen dargestellt sind. In diesen zeigen schematisch:
- Fig. 1: eine Vorrichtung zur Durchführung des erfindungsgemäßen Verfahrens;
- Fig. 2: ein Flussdiagramm einer ersten Variante des erfindungsgemäßen Verfahrens;
- Fig. 3: ein Flussdiagramm einer zweiten Variante des erfindungsgemäßen Verfahrens und
- Fig. 4: die Vorrichtung aus Fig. 1 im näheren Detail.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

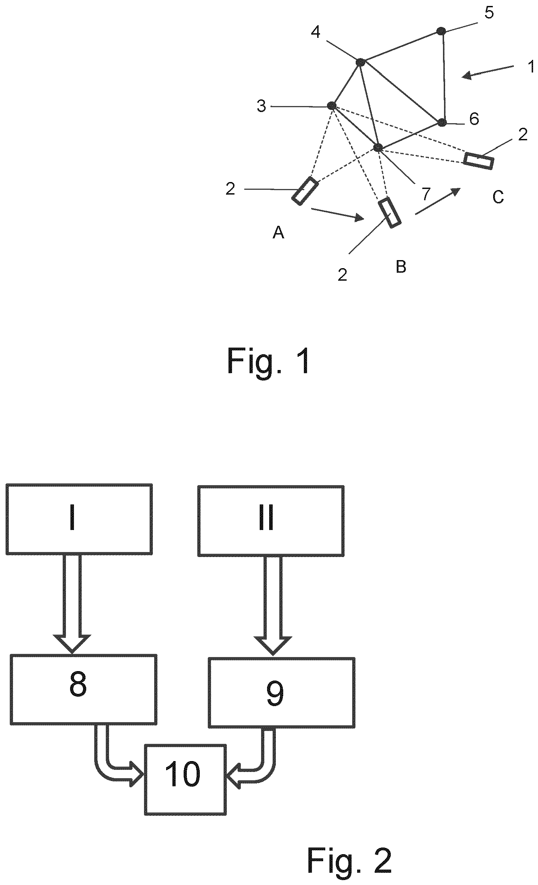

Gemäß Fig. 1 kommt bei einem erfindungsgemäßen Verfahren zur Vermessung eines physischen Objektes 1 eine Kamera 2 zum Einsatz. Bei dieser Kamera kann es sich beispielsweise um eine digitale 2D-Kamera oder um eine Lichtfeldkamera handeln. Mit der Kamera 2 werden aus unterschiedlichen Perspektiven A, B, C Bilddaten eindeutig identifizierbare Punkte 3, 4, 5, 6, 7, die sich auf dem Objekt 1 befunden, aufgezeichnet. Anders gesagt, können digitale Bilder der identifizierbaren Punkte aus räumlich und zeitlich unterschiedlichen Positionen aufgenommen werden.

Bei den eindeutig identifizierbaren Punkten 3, 4, 5, 6, 7 kann es sich um besonders markante Stellen auf dem Objekt 1 und/oder um Tracking-Marker und/oder statisch auf das Objekt 1 projizierte Punkte als eindeutig identifizierbare Merkmale handeln, die vor der Vermessung des Objektes 1 auf diesem angebracht werden.

Aus den Bilddaten der eindeutig identifizierbare Punkte 3, 4, 5, 6, 7 werden gemäß Fig. 2 in einem mit I bezeichneten Schritt räumliche Positionen der eindeutig identifizierbaren Punkte 3, 4, 5, 6, 7, bevorzugt mittels eines Structure from Motion Verfahrens ermittelt und daraus eine dreidimensionale erste Punktwolke 8 der eindeutig identifizierbaren Punkte 3, 4, 5, 6, 7 als globale Karte des Objekts 1 erstellt.

Zur Erfassung einer Oberflächenbeschaffenheit des Objektes 1 werden zudem an einer Oberfläche des Objektes 1 reflektierte Lichtstrahlenbündel ebenfalls als Bilddaten erfasst. Die aus an der Oberfläche des Objektes reflektierten Lichtstrahlenbündeln gewonnenen Bilddaten umfassen zumindest einige der eindeutig identifizierbaren Punkte 3, 4, 5, 6, 7 als auch zwischen den eindeutig identifizierbaren Punkten 3, 4, 5, 6, 7 gelegene Oberflächenbereiche des Objektes.

Aus den erfassten Bilddaten der an der Oberfläche des Objekts reflektierten Lichtstrahlenbündel wird gemäß Figur 2 in einem als II bezeichneten Schritt eine zweite, dreidimensionale Punktwolke 9 als lokale Karte des Objekts ermittelt. Die erste Punktwolke 8 und die zweite Punktwolke 9 werden unter Verwendung der eindeutig identifizierbaren Punkte als Referenzpunkte zu einer dritten Punktwolke 10 zusammengeführt, welche eine dichte Punktwolke des Objektes 1 und somit eine genaue Rekonstruktion des Objektes 1 darstellt. Hierbei können die Positionen der in der Punktwolke 9 enthaltenen eindeutig identifizierbaren Punkten 3, 4, 5, 6, 7 mit den Positionen der in der Punktwolke 8 enthaltenen Punkten 3, 4, 5, 6, 7 abgeglichen und die Punktwolken 8 und 9 exakt zusammengeführt werden.

In Schritt II kann beispielsweise ein bekanntes Muster auf die Oberfläche des Objekts 1 projiziert und dieser überlagert werden. Das der Oberfläche überlagerte Muster kann mit der Kamera 2 aufgezeichnet werden. Anhand von Abweichungen der von der Kamera 2 erzeugten Bilddaten des dem Objekt überlagerten Musters von dem bekannten Muster kann eine Oberflächenstruktur der Oberfläche mittels eines Structured Light Verfahrens (Streifenlichtverfahrens) erfasst werden. Das bekannte Muster dient hierbei als Referenzmuster und das auf die Oberfläche des Objekts 1 projizierte Muster und durch Oberflächenstrukturen gestörte Muster wird anhand des Referenzmusters ausgewertet. Die Bilddaten der an der Oberfläche reflektierten Lichtstrahlenbündel umfassen hierbei die Bilddaten des dem Oberflächenabschnitt des Objekts überlagerten Musters. Anders gesagt umfassen die zur Erstellung der Punktwolke 9 verwendeten Bilddaten die von der Kamera 2 aufgezeichneten Bilddaten des auf die Oberfläche projizierten Musters.

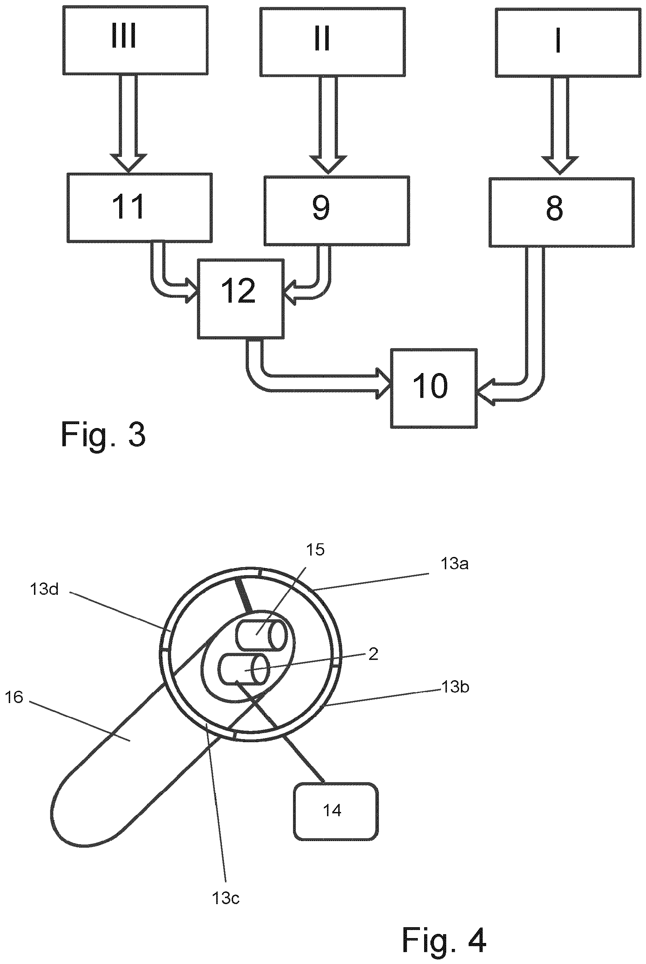

Gemäß Fig. 3 können die Bilddaten der an der Oberfläche des Objekts 1 reflektierten Lichtstrahlenbündel bei unterschiedlichen Beleuchtungsszenarien aufgenommene Bilddaten umfassen. Die unterschiedlichen Beleuchtungsszenarien unterscheiden sich zumindest durch die Richtung, aus welcher die Beleuchtung der Oberfläche des Objektes 1 erfolgt und somit durch den Schattenwurf. Aus den bei unterschiedlichen Beleuchtungsszenarien aufgenommenen Bilddaten können in einem in Fig. 3 mit III bezeichneten Schritt mittels photometrischer Stereoanalyse die Oberflächenbeschaffenheit ermittelt wird. Über das Reflexionsverhalten aus unterschiedlichen Beleuchtungsrichtungen kann die Oberfläche durch die Berechnung von Oberflächennormalen detaillierter analysiert werden. Fehlstellen wie Kratzer, Druckstellen, usw. kommen deutlich zum Vorschein. Dieses Verfahren kann zur Verfeinerung, Erweiterung oder zur Korrektur von Störungen in der in Schritt II gemachten 3D-Aufnahme verwendet werden. Das in Schritt III durchgeführte Verfahren muss nicht auf das gesamte Objekt 1 angewendet werden, sondern kann sich auf besonders kritische Bereiche am Objekt 1 beschränken. In Schritt III wird eine Punktwolke 11 erstellt, welche auch nur auf einen kleinen Teil der Oberfläche beschränkt sein kann. Dies ist vor allem dann vorteilhaft, wenn die in Schritt II durchgeführte 3D-Erfassung der Oberflächenstruktur an bestimmten Stellen fehlerhaft ist. Dies kann beispielsweise durch zu starke Reflexionen an dem Objekt 1 verursacht sein, die eine Sättigung der Kamera 2 zur Folge haben können, wodurch an diesen Stellen keine brauchbaren Bilddaten vorliegen. Natürlich kann Schritt III aber auch auf die gesamte Oberfläche des Objektes 1 angewandt werden. In Schritt III wird ebenfalls aus den dort verwendeten Bilddaten eine 3D-Punktwolke 11 erstellt. Die Punktwolken 9 und 11 werden dann zu der Punktwolke 12 zusammengeführt. Aus der Punktwolke 12 und der Punktwolke 8 wird dann die dichte Punktwolke 10 erstellt, welche sämtliche Daten über das Objekt 1 enthält.

An dieser Stelle sei auch darauf hingewiesen, dass die Reihenfolge der Durchführung der Schritte beliebig sein kann. So kann jeder der Schritte I - III als erster, zweiter oder dritter dieser Schritte durchgeführt werden.

Die Bilddaten des auf die Oberfläche des Objektes projizierten Musters und die bei unterschiedlichen Beleuchtungsszenarien aufgenommenen Bilddaten können jeweils aus mehreren Perspektiven aufgenommen werden. Von Vorteil ist dabei, wenn jede dieser Perspektiven einer der Perspektiven A, B, C unter denen die eindeutig identifizierbarer Punkte 3, 4, 5, 6, 7 zur Bildung der ersten Punktwolke 8 aufgezeichnet werden entspricht. Dadurch kann für jede Perspektive A, B, C zumindest ein vollständiger Satz von Bilddaten gebildet werden, der für die Verarbeitung benötigten Bilddaten umfasst. Zudem kann für die Durchführung des Verfahrens nur eine einzige Kamera 2 verwendet und alle Bilddaten mit dieser aufgezeichnet werden.

Auch ist darauf hinzuweisen, dass die Bilddaten, welche in den oben genannten Schritten I, II, III verwendet werden identisch oder unterschiedlich sein können. So können für jeden der Schritte I- III eigene Aufnahmen mit der Kamera 2 gemacht werden, deren Bilddaten dann für den jeweiligen Schritt verwendet werden. Dies ist insbesondere in Verbindung mit einer 2D-Kamera von Vorteil.

Kommt jedoch eine Lichtfeldkamera als Kamera 2 zum Einsatz, so können dieselben Aufnahmen, d.h. dieselben Bilddaten, die zur Durchführung des Schrittes I verwendet werden, auch zur Bestimmung der Oberflächenbeschaffenheit verwendet werden, da aus den mit der Lichtfeldkamera aufgezeichnete Bilddaten die dreidimensionale Struktur der Oberfläche direkt entnehmbar ist.

Gemäß Fig. 4 weist eine Vorrichtung 12 zur Durchführung des erfindungsgemäßen Verfahrens neben der Kamera 2, die beispielsweise als 2D-Kamera oder als Lichtfeld- bzw. plenoptische Kamera ausgebildet sein kann, eine in mehrere, getrennt voneinander und gleichzeitig aktivierbare Beleuchtungssegmente 13a, 13b, 13c, 13d aufweisende Beleuchtungsvorrichtung 13 auf. Die Beleuchtungssegmente 13a, 13b, 13c, 13d bilden einen Rahmen, wobei die einzelnen Beleuchtungssegmente 13a, 13b, 13c, 13d um eine zentrale Öffnung bzw. Leerstelle des Rahmens angeordnet sind.

Weiters weist die Vorrichtung 12 zumindest eine Steuerung 14 auf, die dazu eingerichtet ist, aus von der Kamera 2 erzeugten Bilddaten der Oberfläche des physischen Objekts 1, ein Modell zumindest der Form und Oberflächenbeschaffenheit des physischen Objekts 1 zu ermitteln. Bei der Steuerung 14 kann es sich beispielsweise um einen entsprechend programmierten Prozessor, insbesondere einen Mikro- oder Signalprozessor, handeln.
Ebenso kann die Steuerung 14 dazu eingerichtet sein einen Aktor zur Bewegung des physischen Objekts 1 und des Projektors 15 anzusteuern. Das Objekt 1 bzw. eine Halterung des Objektes kann hierbei relativ zu der Kamera 2 und/oder zu einem fixen Arbeitsraum bewegt werden.

Weiters kann die Vorrichtung 12 einen Projektor 15, beispielsweise einen Streifenlichtprojektor, zur Erzeugung des Musters, insbesondere eines streifenförmigen Musters, auf dem physischen Objekt 1 aufweisen. Bei dem Projektor 15 kann es sich beispielsweise um einen unter der Bezeichnung "Wenglor MLBS201" bekannt gewordenen Projektor handeln.

Auch können die Kamera 2 und die Beleuchtungsquelle 13, insbesondere alle verwendeten Beleuchtungsquellen, sowie der Projektor 15 an einem Roboterarm 16 montiert sein und von diesem in Abstand von dem Objekt 1 zur Erfassung der Bilddaten über dessen Oberfläche geführt werden.

Zur Steuerung des Roboterarms 16 während der Aufzeichnung der Bilddaten kann eine hier nicht dargestellte Robotersteuerung vorgesehen sein. Bei der Robotersteuerung kann es sich ebenfalls um einen entsprechend programmierten Prozessor, insbesondere einen Mikro- oder Signalprozessor, handeln. Die Robotersteuerung kann entsprechend des Bewegungsablaufs des Roboterarms 16 vorprogrammiert sein bzw. werden. Die Robotersteuerung und eine Kamerasteuerung zur Steuerung der Aufnahmefunktion der Kamera 2 können gemäß einer Variante der Erfindung miteinander kommunizieren und Daten austauschen, sodass ein vollautomatisierter Verfahrensablauf des erfindungsgemäßen Verfahrens möglich ist. Auch können zusätzliche Bewegungen des physischen Objektes 1 über zusätzliche Bewegungsachsen durch die Robotersteuerung erfolgen. Moderne Robotersteuerung verfügen über zusätzliche Schnittstellen zum steuern zusätzlicher Funktionen.

So kann die Robotersteuerung den Roboterarm 16 erst dann aus einer aktuellen Position an eine neue Position weiterbewegen, wenn sie von der Kamerasteuerung ein Signal bekommt, dass sämtliche erforderlichen Bilddaten an der aktuellen Position aufgezeichnet sind. Die Kamerasteuerung kann ebenfalls als entsprechend programmierter Prozessor, insbesondere als Signal- oder Mikroprozessor, ausgebildet sein.

Selbstverständlich kann die Kamerasteuerung bzw. deren Funktion auch in die Robotersteuerung integriert sein. Alternativ oder zusätzlich zur Verwendung einer Robotersteuerung kann der Roboterarm 16 auch manuell beispielsweise mittels eines entsprechenden Steuerungsmittels, wie Joystick, Tablett, Computertastatur, Touchscreen, Maus, Eingabestift, etc. ferngesteuert werden.

Die Vorrichtung 12 ist dazu eingerichtet, mittels der Kamera 2 aus unterschiedlichen Perspektiven A, B, C Bilddaten der eindeutig identifizierbarer Punkte 3, 4, 5, 6, 7 aufzuzeichnen und aus diesen Bilddaten räumliche Positionen der eindeutig identifizierbaren Punkte 3, 4, 5, 6, 7 zu ermitteln sowie die dreidimensionale Punktwolke 8 der eindeutig identifizierbaren Punkte 3, 4, 5, 6, 7 als globale Karte des Objekts 1 zu erstellen. Diese sowie alle anderen Schritte zur Verarbeitung der Bilddaten bei der Durchführung des erfindungsgemäßen Verfahrens können von der Steuerung 14 durchgeführt werden. Weiters kann die Vorrichtung 12 dazu eingerichtet sein, die an der Oberfläche des Objektes 1 reflektierte Lichtstrahlenbündel als Bilddaten zu erfassen und aus den erfassten Bilddaten der an der Oberfläche des Objekts 1 reflektierten Lichtstrahlenbündel die Punktwolke 9 als lokale Karte des Objekts zu ermitteln. Die Steuerung 14 kann ferner dazu eingerichtet sein, die erste Punktwolke 8 und die zweite Punktwolke 9 unter Verwendung der eindeutig identifizierbaren Punkte als Referenzpunkte zu der dritten Punktwolke 10 zusammenzuführen.

Im Folgenden soll anhand eines weiteren Beispiels das erfindungsgemäße Verfahren unter Verwendung der Vorrichtung 12 weiter erläutert werden.

In Schritt I kann die Kamera 2, beispielsweise in Form einer 2D-Kamera, in Kombination mit der als Ringbeleuchtung ausgebildeten Beleuchtungsvorrichtung 13 verwendet werden. Alle Segmente 13a - 13d der Beleuchtungsvorrichtung 13 werden eingeschalten, um das zu rekonstruierende Objekte 1 und dessen Umgebung zu beleuchten. Der Roboterarm 16 bewegt die Kamera 2 für die Bildaufnahmen zu unterschiedlichen Positionen und Orientierungen rund um das Zielobjekt. Dabei ist es wichtig, dass in den Bildaufnahmen sowohl das Objekt 1, als auch mehrere der eindeutig identifizierbaren Punkte 3 - 7 sichtbar sind. Aus diesen Bildern wird dann mithilfe des Structure From Motion Algorithmus die 3D Punktewolke 8 der platzierten Tracking-Marker bzw. der Punkte 3 - 7 generiert. Als Ergebnis erhält man eine Punktewolke, welche die eindeutig identifizierbaren Punkte 3 - 7 des betrachteten Objekts 1 enthält. Die Genauigkeit der 3D Punkte im Raum kann je nach verwendeter Hardware im Bereich von 0.1 mm liegen (auch bei Bauteilen mit einer Größe von mehreren Metern). Als Kamera 2 kann beispielsweise die unter der Bezeichnung Dalsa Genie Nano XL5100 bekannt gewordene Kamera zum Einsatz kommen. Diese Punktewolke 8 wird als globale Karte des Objektes und der Umgebung betrachtet. Es ist zu beachten, dass mit diesem Verfahren nur die einzelnen Punkte 3 - 7 und keine dichte Punktewolke des Objektes 1 rekonstruiert werden. Nicht strukturierte, homogene Oberflächen können mit diesem in Schritt I verwendeten Verfahren nur unter Zuhilfenahme markanter, eindeutig identifizierbarer Punkte wie z.B. physische Marker oder statisch projizierte Lichtmuster, rekonstruiert werden.

An dieser Stelle sei auch darauf hingewiesen, dass es zur Durchführung des erfindungsgemäßen Verfahrens vorteilhaft ist, wenn es unter definierten Lichtbedingungen durchgeführt wird. So kann das Verfahren zum Beispiel in einem dunklen oder stets gleich beleuchteten Raum erfolgen.

In Schritt II werden der Projektor 15 und die Kamera 2 nun in Kombination verwendet, um an unterschiedlichen Positionen dichte Punktewolken 9 von Teilbereichen des Objektes aufzunehmen. Dies erfolgt über das Structured Light Prinzip. Hierbei können sowohl homogene als auch strukturierte Oberflächen rekonstruiert werden. Die Beleuchtungsvorrichtung 13 kann während Schritt II ausgeschaltet werden. Die Teilansichten werden dann mithilfe der bereits über die Structure From Motion erstellte globale Karte zusammengesetzt. Jede Structured Light Aufnahme wird dabei als lokale Karte betrachtet, welche Teilebereiche der globalen Karte beinhaltet. Mithilfe der Lokalisierung dieses Teilbereichs in der globalen Karte, können alle Structured Light Aufnahmen in der globalen Karte registriert werden. Dies ermöglicht eine hochgenaue Zusammenführung aller Structured Light Aufnahmen zu einer einzigen konsistenten 3D Punktewolke. Wichtig dabei ist, dass pro Rekonstruktion mit der Kamera 2 mehrere Tracking-Marker / einzigartige Punkte 3 - 7 sichtbar sind, die in der globalen Karte wiederauffindbar sind. Das Ergebnis dieses Schrittes ist eine dichte und hochgenaue Punktewolke des Objekts 1. Die Punktewolke kann auch zusätzliche Metadaten enthalten. So kann den einzelnen Punkten der Punktewolke auch Metadaten, wie Perspektive, Belichtung, etc. enthalten.

In Schritt III wird die schaltbare Beleuchtungsvorrichtung 13 in Kombination mit der Kamera 2 verwendet, um mithilfe von Photometric Stereo die Oberflächeneigenschaften genauer zu bestimmen. Hierbei werden die einzelnen Segmente 13a-13d einzeln betätigt, sodass beispielsweise immer nur eines der Segmente 13a- 13d leuchtet. Zu jedem dieser unterschiedlichen Beleuchtungsszenarien wird eine Aufnahme mittels der Kamera 2 gemacht. Sodass für die unterschiedlichen Beleuchtungsszenarien Bilddaten erhalten werden. Über das Reflexionsverhalten aus den unterschiedlichen Beleuchtungsrichtungen kann die Oberfläche durch die Berechnung von Oberflächennormalen detaillierter analysiert werden. Fehlstellen wie Kratzer, Druckstellen, usw. kommen deutlich zum Vorschein. Dieses Verfahren kann zur Verfeinerung, Erweiterung oder zur Korrektur von Störungen in der 3D Aufnahme verwendet werden. Dieses Verfahren gemäß Schritt III muss nicht auf das gesamte Objekt 1 angewendet werden, sondern kann sich auf besonders kritische Bereiche am Objekt 1 beschränken.

Schlussendlich erhält man, wenn man alle Daten bzw. Punktwolken 8, 9, 11 bzw. 12 zusammenführt, eine 3D Rekonstruktion des Objekts 1. Je nach Hardware kann die Genauigkeit der Rekonstruktion im Bereich von 0.1 mm liegen. Diese Rekonstruktion kann in weiteren Schritten für einen CAD Abgleich, für eine Bauteilanalyse oder für nachfolgende Bearbeitungsschritte herangezogen werden.

Der Ordnung halber sei abschließend darauf hingewiesen, dass zum besseren Verständnis des Aufbaus der Vorrichtung diese bzw. deren Bestandteile teilweise unmaßstäblich und/oder vergrößert und/oder verkleinert dargestellt wurden.

### Bezugszeichenaufstellung

- 1: Objekt
- 2: Kamera
- 3: Punkt
- 4: Punkt
- 5: Punkt

- 6: Punkt
- 7: Punkt
- 8: Punktwolke
- 9: Punktwolke
- 10: Punktwolke

- 11: Punktwolke
- 12: Punktwolke
- 13: Beleuchtungsvorrichtung
- 14: Steuerung
- 15: Projektor

- 16: Roboterarm

## Patentansprüche

1. Verfahren zur Vermessung eines physischen Objektes (1), wobei mittels zumindest einer Kamera (2) aus unterschiedlichen Perspektiven (A, B, C) Bilddaten eindeutig identifizierbarer Punkte (3, 4, 5, 6, 7) auf dem Objekt (1) aufgezeichnet und aus den Bilddaten räumliche Positionen der eindeutig identifizierbaren Punkte (3, 4, 5, 6, 7) ermittelt werden und zumindest eine dreidimensionale erste Punktwolke (8) der eindeutig identifizierbaren Punkte (3, 4, 5, 6, 7) als globale Karte des Objekts (1) erstellt wird, **dadurch gekennzeichnet, dass** zur Erfassung einer Oberflächenbeschaffenheit des Objektes (1) an einer Oberfläche des Objektes (1) reflektierte Lichtstrahlenbündel als Bilddaten erfasst werden, wobei die aus an der Oberfläche des Objektes reflektierten Lichtstrahlenbündeln gewonnenen Bilddaten zumindest einige der eindeutig identifizierbaren Punkte (3, 4, 5, 6, 7) als auch zwischen den eindeutig identifizierbaren Punkten (3, 4, 5, 6, 7) gelegene Oberflächenbereiche umfassen, und aus den erfassten Bilddaten der an der Oberfläche des Objekts reflektierten Lichtstrahlenbündel zumindest eine zweite, dreidimensionale Punktwolke (9, 12) als lokale Karte des Objekts ermittelt wird, wobei die erste Punktwolke (8) und die zweite Punktwolke (9, 12) unter Verwendung der eindeutig identifizierbaren Punkte (3, 4, 5, 6, 7) als Referenzpunkte zu zumindest einer dritten Punktwolke (10) zusammengeführt werden.

2. Verfahren nach Anspruch 1, dass zumindest ein bekanntes Muster auf die Oberfläche des Objekts (1) projiziert und dieser überlagert wird, wobei Bilddaten des der Oberfläche überlagerten Musters erzeugt werden und anhand von Abweichungen der erzeugten Bilddaten des dem Objekt überlagerten Musters von dem bekannten Muster eine Oberflächenstruktur der Oberfläche mittels eines Structured Light Verfahrens erfasst wird, wobei die Bilddaten der an der Oberfläche reflektierten Lichtstrahlenbündel die Bilddaten des dem Oberflächenabschnitt des Objekts überlagerten Musters umfassen.

3. Verfahren nach Anspruch 1 oder 2, **dadurch gekennzeichnet, dass** die Bilddaten der an der Oberfläche des Objekts (1) reflektierten Lichtstrahlenbündel bei unterschiedlichen Beleuchtungsszenarien aufgenommene Bilddaten umfassen, wobei sich die unterschiedlichen Beleuchtungsszenarien zumindest durch die Richtung, aus welcher die Beleuchtung erfolgt, und somit durch den Schattenwurf unterscheiden, wobei aus den bei unterschiedlichen Beleuchtungsszenarien aufgenommenen Bilddaten mittels photometrischer Stereoanalyse die Oberflächenbeschaffenheit ermittelt wird.

4. Verfahren nach Anspruch 3, **dadurch gekennzeichnet, dass** die Bilddaten des auf die Oberfläche des Objektes projizierten Musters und die bei unterschiedlichen Beleuchtungsszenarien aufgenommenen Bilddaten jeweils aus mehreren, den Perspektiven, unter denen die eindeutig identifizierbarer Punkte (3, 4, 5, 6, 7) zur Bildung der ersten Punktwolke (8) aufgezeichnet werden, entsprechenden Perspektiven aufgezeichnet werden, sodass für jede Perspektive zumindest ein Satz von Bilddaten gebildet wird, welcher Satz von Bilddaten Bilddaten des auf die Oberfläche projizierten Musters und der bei unterschiedlichen Beleuchtungsszenarien sowie der zur Erzeugung der ersten Punktwolke aufgezeichneten Bilddaten umfasst.

5. Verfahren nach Anspruch 3 oder 4, **dadurch gekennzeichnet, dass** die Bilddaten des auf der Oberfläche des Objektes projizierten Bildes des bekannten Musters und die Bilddaten der eindeutig identifizierbaren Punkte (3, 4, 5, 6, 7) zur Bildung der ersten Punktewolke (8) sowie die bei unterschiedlichen Beleuchtungsszenarien aufgenommenen Bilddaten mit derselben Kamera (2) aufgezeichnet werden.

6. Verfahren nach einem der Ansprüche 1 bis 5, **dadurch gekennzeichnet, dass** die Bilddaten der an den Oberflächenabschnitten reflektierten Lichtstrahlenbündel mit einer Lichtfeldkamera erzeugte Bilddaten umfasst, wobei die Oberflächenbeschaffenheit aus den mit der Lichtfeldkamera erzeugten Bilddaten ermittelt werden.

7. Verfahren nach einem der Ansprüche 1 bis 6, **dadurch gekennzeichnet, dass** auf die Oberfläche des Objektes (1) Tracking-Marker aufgebracht oder projiziert werden und die eindeutig identifizierbaren Punkte (3, 4, 5, 6, 7) durch diese Tracking-Marker gebildet werden.

8. Verfahren nach einem der Ansprüche 1 bis 7, **dadurch gekennzeichnet, dass** die zumindest eine Kamera (2) und zumindest eine Beleuchtungsquelle (13), insbesondere alle verwendeten Beleuchtungsquellen, an einem Roboterarm (15) montiert sind und von diesem in Abstand von dem Objekt über dessen Oberfläche geführt werden.

9. Vorrichtung (12) zur Vermessung eines physischen Objektes, wobei die Vorrichtung zumindest eine Kamera (2) umfasst, **dadurch gekennzeichnet, dass** die Vorrichtung eine in mehrere, getrennt voneinander und gleichzeitig aktivierbare Beleuchtungssegmente (13a, 13b, 13c, 13d) aufweisende Beleuchtungsvorrichtung (13) umfasst, wobei die Beleuchtungssegmente einen Rahmen bilden, wobei die einzelnen Beleuchtungssegmente um eine zentrale Öffnung des Rahmens angeordnet sind, wobei die Vorrichtung zumindest eine Steuerung (14) aufweist, die dazu eingerichtet ist, aus von der Kamera erzeugten Bilddaten der Oberfläche des physischen Objekts (1) ein Modell zumindest der Form und einer Oberflächenbeschaffenheit des physischen Objekts (1) zu ermitteln.

10. Vorrichtung nach Anspruch 9, **dadurch gekennzeichnet, dass** sie einen Projektor (15) zur Erzeugung eines Musters, insbesondere eines streifenförmigen Musters, auf dem physischen Objekt (1) aufweist.

11. Vorrichtung nach Anspruch 9 oder 10, **dadurch gekennzeichnet, dass** die zumindest eine Kamera (2) eine Lichtfeldkamera ist.

12. Vorrichtung nach einem der Ansprüche 9 bis 11, **dadurch gekennzeichnet, dass** sie dazu eingerichtet ist, mittels der zumindest einen Kamera (2) aus unterschiedlichen Perspektiven (A, B, C) Bilddaten eindeutig identifizierbarer Punkte (3, 4, 5, 6, 7), insbesondere Tracking-Marker oder projizierte Lichtmuster, auf dem Objekt (1) aufzuzeichnen und aus den Bilddaten räumliche Positionen der eindeutig identifizierbaren Punkte (3, 4, 5, 6, 7) zu ermitteln sowie eine dreidimensionale erste Punktwolke (8) der eindeutig identifizierbaren Punkte (3, 4, 5, 6, 7) als globale Karte des Objekts (1) zu erstellen, sowie zur Erfassung einer Oberflächenbeschaffenheit des Objektes (1) an einer Oberfläche des Objektes (1) reflektierte Lichtstrahlenbündel als Bilddaten zu erfassen, wobei die aus an der Oberfläche des Objektes (1) reflektierten Lichtstrahlenbündeln gewonnenen Bilddaten zumindest einige der eindeutig identifizierbaren Punkte (3, 4, 5, 6, 7) als auch zwischen den eindeutig identifizierbaren Punkten (3, 4, 5, 6, 7) gelegene Oberflächenbereiche umfassen, und aus den erfassten Bilddaten der an der Oberfläche des Objekts (1) reflektierten Lichtstrahlenbündel eine zweite, dreidimensionale Punktwolke (9) als lokale Karte des Objekts zu ermitteln, sowie die erste Punktwolke (8) und die zweite Punktwolke (9) unter Verwendung der eindeutig identifizierbaren Punkte als Referenzpunkte zu einer dritten Punktwolke (10) zusammenzuführen.

13. Vorrichtung nach Anspruch 12, **dadurch gekennzeichnet, dass** sie dazu eingerichtet ist, zumindest ein bekanntes Muster auf die Oberfläche des Objekts projizieren und dieser zu überlagern sowie Bilddaten des der Oberfläche überlagerten Musters zu erzeugen und anhand von Abweichungen der erzeugten Bilddaten des dem Objekt überlagerten Musters von dem bekannten Muster eine Oberflächengeometrie der Oberfläche mittels eines Structured Light Verfahrens zu erfassen, wobei die Bilddaten der an der Oberfläche reflektierten Lichtstrahlenbündel die Bilddaten des dem Oberflächenabschnitt des Objekts überlagerten Musters umfassen.

14. Vorrichtung nach Anspruch 12 oder 13, **dadurch gekennzeichnet, dass** die Bilddaten der an der Oberfläche des Objekts reflektierten Lichtstrahlenbündel bei unterschiedlichen Beleuchtungsszenarien aufgenommene Bilddaten umfassen, wobei sich die unterschiedlichen Beleuchtungsszenarien zumindest durch die Richtung, aus welcher die Beleuchtung erfolgt, und somit durch den Schattenwurf unterscheiden, wobei die Vorrichtung dazu eingerichtet ist, aus den bei unterschiedlichen Beleuchtungsszenarien aufgenommenen Bilddaten mittels photometrischer Stereoanalyse die Oberflächenbeschaffenheit zu ermitteln.

15. Vorrichtung nach einem der Ansprüche 9 bis 14, **dadurch gekennzeichnet, dass** die Kamera und eine Beleuchtungsvorrichtung an einem Roboterarm (16) angeordnet sind, wobei falls die Vorrichtung einen Projektor zur Erzeugung eines Musters auf der Oberfläche des Objektes aufweist, dieser Projektor bevorzugterweise ebenfalls auf dem Roboterarm (16) angeordnet ist.
